# EUROPÄISCHE PATENTANMELDUNG

(11) **EP 1 174 037 A2**
(43) Veröffentlichungstag der Anmeldung: **23.01.2002**
(21) Anmeldenummer: 01113361.8
(22) Anmeldetag: 01.06.2001
(51) Int. Cl.: A23B 4/044, A23B 4/052

(54) **Räucherverfahren unter Einsatz von Flüssigrauch sowie eine Räuchervorrichtung**

(30) Priorität: 21.07.2000 DE 20012665 U
(71) Anmelder: Bayha & Strackbein GmbH, 59759 Arnsberg (DE)
(72) Erfinder: Geue, Franz-Hubert, 59846 Sundern (DE); Bayha, Günter, 59759 Arnsberg (DE); Schmidt, Horst-Werner, 58099 Hagen (DE)
(74) Vertreter: Patentanwälte Meinke, Dabringhaus und Partner

(57) **Zusammenfassung**

Mit einem Verfahren und einer Vorrichtung zur Behandlung von Lebensmitteln mittels Rauch unter Einsatz von Flüssigrauch als von Schadstoffen befreites Rauchkondensat, das in eine mit den Lebensmitteln bestückte Räucherkammer über Düsen zugeführt wird, sollen unterschiedliche Geschmacksrichtungen und/oder gleich bleibende Qualitäten mit einfachen Mitteln möglich gemacht werden.

Verfahrensmäßig geschieht dies dadurch, daß unterschiedlich aromatisierte Flüssigrauche über Leitungssysteme der Zerstäuberdüse nacheinander oder gleichzeitig zugeführt werden, wobei die Vorrichtung sich dadurch auszeichnet, daß an der Zerstäuberdüse (3) Leitungssysteme (4-6) zur Zuführung unterschiedlich aromatisierten Flüssigrauches angeschlossen sind.

## Beschreibung

Die Erfindung richtet sich auf ein Verfahren zur Behandlung von Lebensmitteln mittels Rauch unter Einsatz von Flüssigrauch als von Schadstoffen befreites Rauchkondensat, wobei das Kondensat in die mit den zu behandelnden Lebensmitteln bestückte Räucherkammer über eine Zerstäuberdüse eingedüst wird.

Ein derartiges Räucherverfahren ist beispielsweise aus der DE-197 29 766-A1 der Anmelderin bekannt. Bei derartigen Verfahren unter Einsatz von sogenanntem Flüssigrauch wird mittels Preßluft eine das Rauchkondensat beinhaltende Flüssigkeit in einer Räucherkammer auf die zu behandelnden Lebensmittel aufgesprüht. Die Verdüsung der Flüssigkeit ist dabei so hoch, daß sich trocken anfühlender Nebel, mit dem das Räuchern durchgeführt wird, entsteht.

In der Praxis werden sehr unterschiedliche Aromen beim Räuchern benutzt, wobei dies bei herkömmlichen Räucherverfahren dadurch bewerkstelligt wird, daß beispielsweise unterschiedliche Holzspäne zur Erzeugung des Rauches benutzt werden mit sehr unterschiedlichen Geschmacksstoffen oder aber es werden die Räucherspäne zusätzlich mit z.B. Wacholderbeeren, Whisky, Dufthölzern od. dgl. behandelt, um dann diese Geschmacks- und Aromastoffe mit in den Rauch einzubringen. Dabei sind gleichmäßige Räucherergebnisse nur sehr schwer zu erhalten, da aufgrund des vergleichsweise natürlichen Verbrennungsprozesses unterschiedliche Ergebnisse zwangsläufig sind.

Um möglichst gleichmäßige Ergebnisse zu erzielen, ist das Räucherverfahren mittels Flüssigrauch entwickelt worden.

Hier setzt die Erfindung ein, deren Ziel es ist, dem Endverbraucher eine Möglichkeit an die Hand zu geben, in der gleichen Räucherkammer sehr unterschiedliche Geschmacksrichtungen durch Flüssigrauch auf die zu behandelnden Produkte aufbringen zu können mit jeweils genau reproduzierbaren Ergebnissen.

Mit einem Verfahren der eingangs bezeichneten Art wird diese Aufgabe gemäß der Erfindung dadurch gelöst, daß unterschiedlich aromatisierte Flüssigrauche über Leitungssysteme der Zerstäuberdüse nacheinander oder gleichzeitig zugeführt werden.

Diese Aufgabe wird mit einer Vorrichtung erfindungsgemäß dadurch gelöst, daß an der Zerstäuberdüse Leitungssysteme als Rohrleitungen und/oder Schlauchleitungen zur Zuführung unterschiedlich aromatisierten Flüssigrauches angeschlossen sind.

Dadurch, daß die Zerstäuberdüse über unterschiedliche Rohrleitungen mit unterschiedlichem Flüssigrauch beaufschlagbar ist, läßt sich in der Räucherkammer eine Vielzahl von unterschiedlichen Aromen, unterschiedliche Raucharten u. dgl. einbringen, wobei auch sehr unterschiedliche Produkte geräuchert werden können, was z.B. den Einsatz in Catering-Betrieben, Hotelküchen od. dgl. besonders attraktiv macht, da sowohl Fleisch, Wurst, aber auch Fisch, Käselaibe od. dgl. problemlos in der gleichen Räucherkammer nacheinander geräuchert werden können, wobei lediglich unterschiedlicher Flüssigrauch zum Einsatz kommt.

Ausgestaltungen der Erfindung ergeben sich aus den Unteransprüchen, wobei verfahrensmäßig vorgesehen sein kann, daß der Zerstäuberdüse über eine Mehrzahl von einzelnen Flüssigrauchtanks zugeordneten Förderpumpen oder über eine einzelne, mit einer Mehrzahl von den jeweiligen Flüssigrauchtanks zugeordneten Saugleitungen der Flüssigrauch zugeführt wird, wobei die Förderpumpen und/oder die Saugleitungen einzeln oder in Kombination zuschaltbar sind.

Vorrichtungsmäßig kann diese Ausgestaltung darin bestehen, die Zerstäuberdüse mit einer über ein Ventil zu- und abschaltbaren Flüssigrauchzuführleitung zu versehen, wobei diese Zuführleitung von einer Mehrzahl von Zuführpumpen beaufschlagt ist, die der Anzahl der unterschiedlich aromatisierten Flüssigrauchtanks entspricht. Das heißt, jedem Tank ist eine Zuführpumpe zugeordnet, wobei deren Druckleitung dann in die Zuführleitung zur Zerstäuberdüse mündet.

Alternativ dazu kann vorgesehen sein, daß die Zerstäuberdüse mit einer Druckleitung zur Zuführpumpe verbunden ist, wobei die Saugleitung der Zuführpumpe mit einer Mehrzahl von Flüssigrauchtanks verbunden ist, die über Ventile zu- und abschaltbar sind. Diese Alternative sieht nur eine Zuführpumpe vor, wobei deren Saugleitung als Einzelsaugleitung zu den einzelnen Tanks schaltbar ist. Damit ergibt sich in einem Falle der Aufbau in Art einer Pumpkaskade, im anderen Falle mit nur einer Pumpe in Art einer Ventilkaskade, wobei beiden Lösungen gemeinsam ist, daß wenigstens die Zuführleitung zusätzlich mit einer Druckluftsprühleitung versehen ist.

An dieser Stelle sei bemerkt, daß der Flüssigrauch z.B. in einem Drucktank untergebracht sein kann, so daß er aufgrund des im Tank herrschenden Druckes selbsttätig der Zerstäuberdüse zuführbar ist, ohne daß hier eine Förderpumpe zwischengeschaltet ist. Auch kann beispielsweise eine Venturidüse mittels Druckluft die Tankinhalte jeweils individuell oder je nach Schaltungsart auch gleichzeitig den Tanks entziehen, um nur weitere Zuführmöglichkeiten zur Räucherkammer anzugeben, die von der Erfindung erfaßt sind.

Auch kann vorgesehen sein, die Saugleitung der Dosierpumpe(n) mit einer Druckluftquelle zur Zuführung von Spüldruckluft zu verbinden.

Vorteilhaft kann die Druckluftquelle mit den Zuschaltventilen der individuellen Flüssigrauchtank-Saugleitungen derart verbunden sein, daß beim Spülvorgang sämtliche Ventile und alle Bereiche der Pumpensaugleitung durch Druckluft spülbar sind.

In weiterer Ausgestaltung sieht die Erfindung eine Steuerung vor, die, wie an sich bekannt, die taktweise Zuführung von Flüssigrauch in die Räucherkammer, das Abschalten der Zuführung des Flüssigrauches und das Verwirbeln des eingedüsten Rauches in der Kammer sowie das erneute Zuführen von Flüssigrauch im Takt steuert, wobei der letztere Zuführtakt des Flüssigrauches der Leitungsentleerung vom eingesetzten Flüssigrauch dient.

Mit dieser Steuerung wird gewährleistet, daß im Leitungssystem nicht versehentlich Rauchrückstände einer Vorbehandlung anderer Art verbleiben, so daß sich die Aromen mischen und zu ungewollten Ergebnissen führen. Dies verhindert eine derartige Vorrichtung.

Die Steuerung kann dabei so gestaltet sein, daß sie beim letzten Flüssigrauch-Zuführtakt die Zuführpumpe ausschaltet und die Spüldruckluftzufuhr zuschaltet, derart, daß bei diesem letzten Takt die Leitungen und die Pumpe von eingesetztem Flüssigrauch nach Abschluß gereinigt sind, wobei die Steuerung auch zur Füllung des Leitungssystemes mit einzusetzendem Flüssigrauch vor dem ersten Einsprühtakt ausgestaltet ist.

Weitere Merkmale, Einzelheiten und Vorteile der Erfindung ergeben sich aufgrund der nachfolgenden Beschreibung sowie anhand der Zeichnung. Diese zeigt in
- Fig. 1: die Aufsicht auf eine Räucherkammer sowie in den
- Fig. 2 und 3: zwei unterschiedliche Verrohrungsaufbauten der erfindungsgemäßen Vorrichtung.

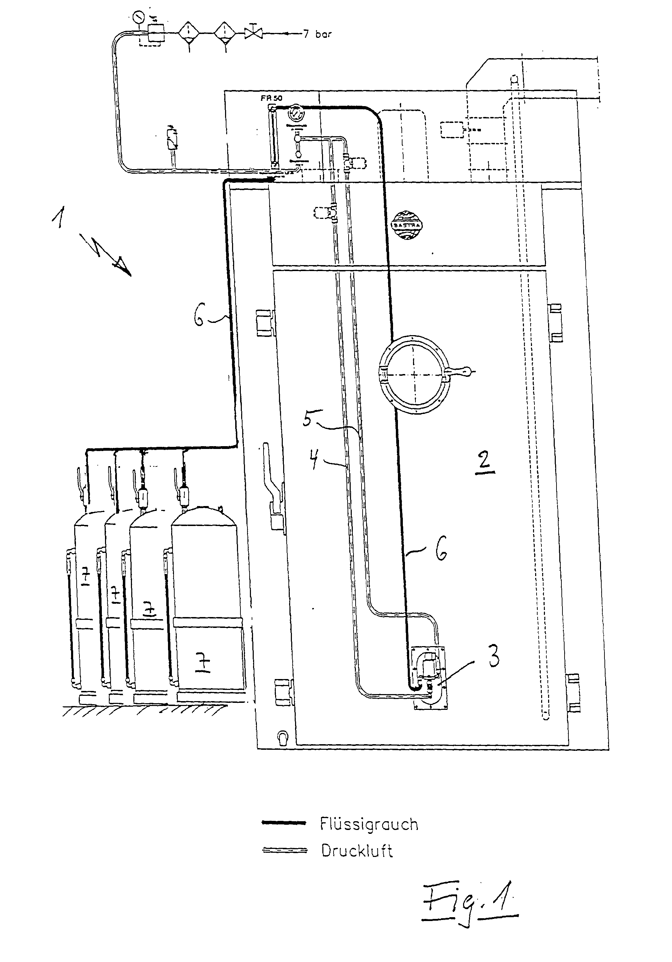

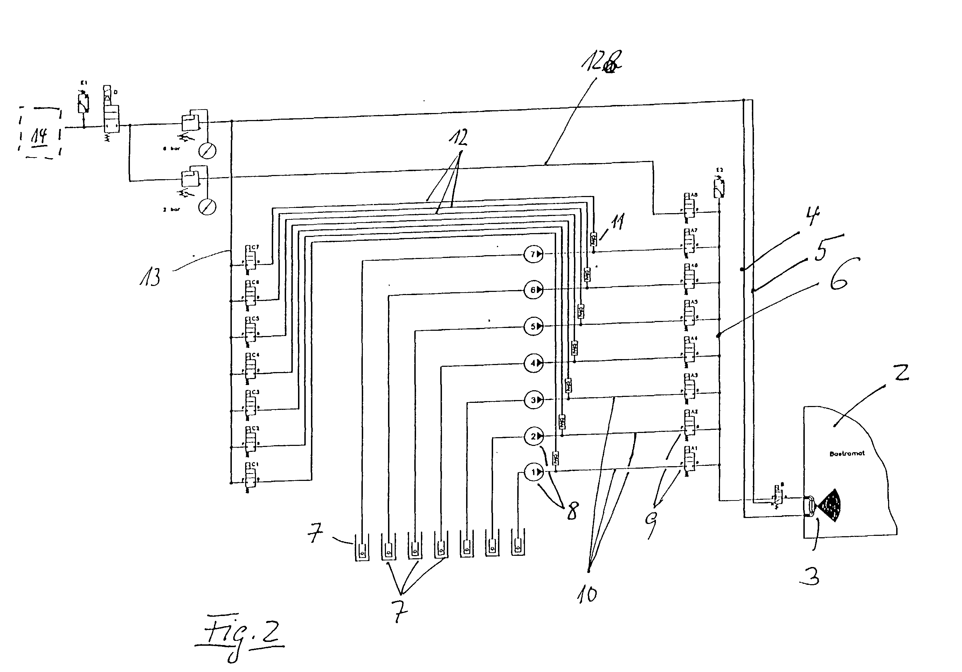

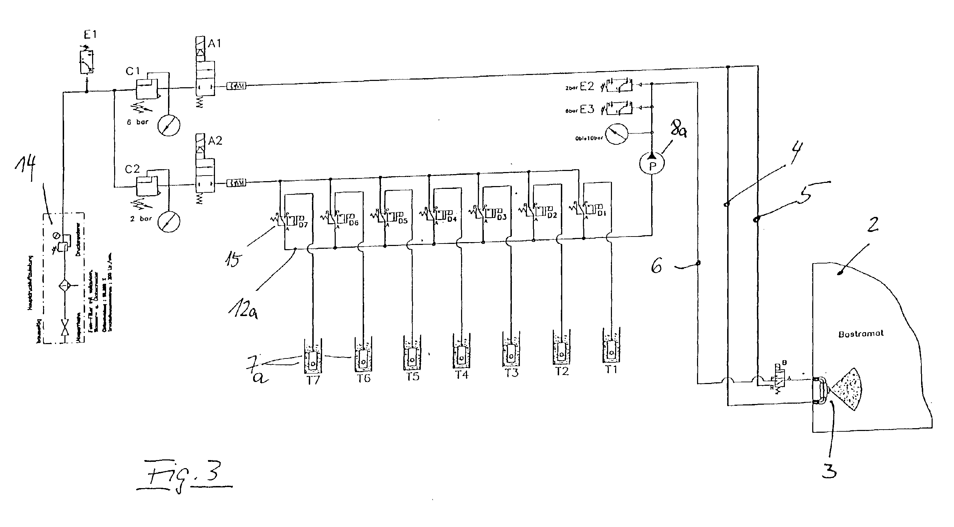

Die allgemein mit 1 bezeichnete Vorrichtung besteht aus einer mit zu behandelnden Produkten füllbaren Räucherkammer 2, die beispielsweise an einer Seiten- oder Rückwand im unteren Bereich eine Zerstäuberdüse 3 aufweist, die von einer Druckluftzerstäuberleitung 4, einer Druckluftspülleitung 5 und einer Flüssigrauchzuführleitung 6 beaufschlagt ist. Die Flüssigrauchzuführleitung 6 beaufschlagt eine Mehrzahl von Flüssigrauchtanks 7, wobei diese Tanks zu- und abschaltbar sind, was in Fig. 1 nicht näher dargestellt ist. Jeder Tank kann mit einer eigenen Förderpumpe 8 ausgerüstet sein - Schaltvariante nach Fig. 2 - oder mit einer eigenen Zuführpumpe 8a - Schaltvariante nach Fig. 3. Diese Varianten in der Verschaltung sind in Fig. 1 nicht näher dargestellt.

Bezug nehmend auf Fig. 2 ist dargestellt, daß jeder Flüssigrauchtank 7, der mit unterschiedlich aromatisiertem Kondensat gefüllt sein kann, mit einer eigenen Förderpumpe 8 ausgerüstet ist, die in Fig. 2 im dargestellten Beispiel die Ziffern 1 bis 7 tragen. Über Ventile 9 kann der jeweilige Tank 7 mit der Flüssigrauchzuführleitung 6 verbunden sein und kann über diese Leitung 6 der Zerstäuberdüse 3 zugeführt werden.

In Fig. 2 sind die Leitungsbereiche zwischen der Hauptzuführleitung 6 für den Flüssigrauch und den einzelnen Pumpen 8 mit 10 bezeichnet. Über Rückschlagventile 11 sind Druckluftspülleitungen 12 mit diesen Leitungen 10 verbunden, derart, daß über eine Druckluftleitung 13 aus einem mit 14 bezeichneten Druckluftnetz oder eine entsprechende Druckluftquelle nicht nur die Zerstäuberdruckluft über die Leitung 4 der Düse 3 zugeführt werden kann, sondern über die Leitungen 12, die Leitungen 10 und auch die Leitungen 6 von darin befindlichem Flüssigrauch gereinigt und befreit werden können. Eine solche Stufe geschieht zweckmäßig nach Ende des Behandlungsvorganges. Da dieser taktweise erfolgt, kann auch der letzte Behandlungstakt über Umgehung der Pumpen 8 allein vom Druckluftnetz 14 bewerkstelligt werden, wozu der in der Regel höhere Druck in diesem Netz gedrosselt wird, hierauf kommt es aber hier nicht näher an.

In Fig. 3 ist die Variante dargestellt, daß alle Flüssigrauchtanks 7a über eine gemeinsame Pumpe 8a auf die Zuführleitungen 6 geschaltet sind. Hier kann wieder aus dem Druckluftnetz 14 die Pumpensaugleitung 12a jeweils freigeblasen werden durch Schaltung der entsprechenden Umsteuerventile 15.

Natürlich sind die beschriebenen Ausführungsbeispiele der Erfindung noch in vielfacher Hinsicht abzuändern, ohne den Grundgedanken zu verlassen. So können beispielsweise die Schaltanordnungen der Fig. 2 und 3 nicht nur einzeln verwirklicht werden, sondern ggf. auch gemischt, etwa wenn jeweils drei Tanks von einer Pumpe beaufschlagt sind u. dgl. mehr.

## Patentansprüche

1. Verfahren zur Behandlung von Lebensmitteln mittels Rauch unter Einsatz von Flüssigrauch als von Schadstoffen befreites Rauchkondensat, wobei das Kondensat in die mit den zu behandelnden Lebensmitteln bestückte Räucherkammer über eine Zerstäuberdüse eingedüst wird,
**dadurch gekennzeichnet,**
**daß** unterschiedlich armomatisierte Flüssigrauche über Leitungssysteme der Zerstäuberdüse nacheinander oder gleichzeitig zugeführt werden.

2. Verfahren nach Anspruch 1,
**dadurch gekennzeichnet,**
**daß** der Zerstäuberdüse über eine Mehrzahl von einzelnen Flüssigrauchtanks zugeordneten Förderpumpen oder über eine einzelne, mit einer Mehrzahl von den jeweiligen Flüssigrauchtanks zugeordneten Saugleitungen der Flüssigrauch zugeführt wird, wobei die Förderpumpen und/oder die Saugleitungen einzeln oder in Kombination zuschaltbar sind.

3. Vorrichtung zur Durchführung eines Räucherverfahrens bei zu räuchernden Lebensmitteln unter Einsatz von Flüssigrauch als von Schadstoffen befreites Rauchkondensat, wobei das Kondensat in die mit den zu behandelnden Lebensmitteln bestückte Räucherkammer über eine Zerstäuberdüse eingedüst wird,
**dadurch gekennzeichnet,**
**daß** an der Zerstäuberdüse (3) Leitungssysteme (4-6) als Rohrleitungen und/oder Schlauchleitungen zur Zuführung unterschiedlich aromatisierten Flüssigrauches angeschlossen sind.

4. Vorrichtung nach Anspruch 3,
**dadurch gekennzeichnet,**
**daß** die Zerstäuberdüse (3) mit einer über ein Ventil zu- und abschaltbare Flüssigrauchzuführleitung (6) versehen ist, wobei diese Zuführleitung von einer Mehrzahl von Zuführpumpen (8) beaufschlagt ist, die der Anzahl der unterschiedlich aromatisierten Flüssigrauchtanks (7) entspricht.

5. Vorrichtung nach Anspruch 3 oder 4,
**dadurch gekennzeichnet,**
**daß** die Zuführleitung (6) zusätzlich mit einer Druckluft-/ Spülleitung (12b) versehen ist.

6. Vorrichtung nach Anspruch 3 oder 4,
**dadurch gekennzeichnet,**
**daß** die Zerstäuberdüse (3) mit einer Druckleitung einer Zuführpumpe (8a) verbunden ist, wobei die Saugleitung (12a) der Zuführpumpe (8a) mit einer Mehrzahl von Flüssigrauchtanks (7a) verbunden ist, die über Ventile (15) zu- und abschaltbar sind.

7. Vorrichtung nach einem der vorangehenden Ansprüche,
**dadurch gekennzeichnet,**
**daß** die Saugleitung jeder Dosierpumpe (8,8a) mit einer Druckluftquelle (14) zur Zuführung von Spüldruckluft verbunden ist.

8. Vorrichtung nach Anspruch 7,
**dadurch gekennzeichnet,**
**daß** die Druckluftquelle (14) mit den Zuschaltventilen der individuellen Flüssigrauchtank-Saugleitungen derart verbunden ist, daß beim Spülvorgang sämtliche Ventile und alle Bereiche der Pumpensaugleitung durch Druckluft spülbar sind.

9. Vorrichtung nach einem der vorangehenden Ansprüche,
**dadurch gekennzeichnet,**
**daß** eine Steuerung vorgesehen ist, die, wie an sich bekannt, die taktweise Zuführung von Flüssigrauch in die Räucherkammer, das Abschalten der Zuführung des Flüssigrauches und das Verwirbeln des eingedüsten Rauches in der Kammer sowie das erneute Zuführen von Flüssigrauch im Takt steuert, wobei der letzte Zuführtakt des Flüssigrauches der Leitungsentleerung vom eingesetzten Flüssigrauch dient.

10. Vorrichtung nach Anspruch 9,
**gekennzeichnet durch**
eine Steuerung, die beim letzten Flüssigrauchzuführtakt die Zuführpumpe (8) ausschaltet und die Spüldruckluftzufuhr zuschaltet, derart, daß bei diesem letzten Takt die Leitungen (6,10,12a) und die Pumpe (8) von eingesetztem Flüssigrauch nach Abschluß gereinigt sind.

11. Vorrichtung nach Anspruch 9 oder 10,
**gekennzeichnet durch**
eine Steuerung zur Füllung des Leitungssystemes (6,10,12a) mit einzusetzendem Flüssigrauch vor dem ersten Einsprühtakt.
